# EUROPÄISCHE PATENTSCHRIFT

(11) **EP 0 486 881 B1**
(45) Veröffentlichungstag und Bekanntmachung des Hinweises auf die Patenterteilung: **05.02.1997**
(21) Anmeldenummer: 91118953.8
(22) Anmeldetag: 07.11.1991
(51) Int. Cl.: C08G 18/70

(54) **Nichtwässrige Polyisocyanatzubereitung**
Non-aqueous polyisocyanate composition
Composition non-aqueuse de polyisocyanate

(30) Priorität: 20.11.1990 DE 4036927
(43) Veröffentlichungstag der Anmeldung: 27.05.1992
(73) Patentinhaber: BASF Aktiengesellschaft, 67063 Ludwigshafen (DE)
(72) Erfinder: Haeberle, Karl, Dr., W-6730 Neustadt (DE); Maempel, Lothar, Dr., W-6835 Bruehl (DE); Filges, Ulrich, Dr., W-6703 Limburgerhof (DE)

(56) Entgegenhaltungen:
- EP-A- 0 013 112
- EP-A- 0 095 594
- EP-A- 0 381 862
- DE-A- 2 703 271

## Beschreibung

Die Erfindung betrifft eine nichtwäßrige Polyisocyanatzubereitung, enthaltend
a) mindestens ein aliphatisches Polyisocyanat mit einer mittleren NCO-Funktionalität von 2,5 bis 3,5 und
b) eine die Dispergierbarkeit des Polyisocyanates gewährleistende Menge eines Umsetzungsproduktes aus einem Diisocyanat, ausgewählt aus Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, Tetramethylhexandiisocyanat, 1-Isocyanato-3,3,5-trimethyl-5-(isocyanatomethyl)cyclohexan, 2,4- und 2,6-Toluylendiisocyanat, Tetramethylxylylen-diisocyanat, p-Xylylendiiosocyanat, 2,4'- und 4,4'-Diisocyanatodiphenylmethan oder einem Gemisch aus mindestens zweien dieser Diisocyanate mit einem ein- oder mehrwertigen Polyalkylenethermonoalkohol mit 2 bis 4 C-Atomen in den Alkylengruppen, der eine mindestens 8 Ethylenoxideinheiten aufweisende Polyetherkette enthält.

Nichtwäßrige Polyisocyanatzubereitungen sind an sich bekannt. Sie können in Wasser emulgiert werden oder mit Vorteil in wäßrige Polymerlatices eingerührt werden.

Gegenüber den wäßrigen Polyisocyanatzubereitungen der US-A 4 396 738 haben die nichtwäßrigen Zubereitungen den Vorteil, daß sie eine deutlich verbesserte Lagerstabilität aufweisen.

Aus EP-A 13 112, EP-A 61 628 und US-A 4 413 112 waren Polyisocyanatzubereitungen auf Basis von aromatischen Polyisocyanaten zur Herstellung von Klebstoffen bekannt. Diese genügen jedoch in verschiedenen Anwendungseigenschaften nicht den steigenden Anforderungen. Die Anwendbarkeit der Polyisocyanatzubereitungen ist stark eingeschränkt, da sie keine ausreichende Emulgierfähigkeit gewährleisten.

Aus EP-A 206 059 waren Polyisocyanatzubereitungen bekannt, die aus einem aliphatischen Polyisocyanat und einem Emulgator bestehen, der ein Umsetzungsprodukt eines Polyethylenetheralkoholes mit Polyisocyanaten darstellt. Es wird eine Fülle von Isocyanaten genannt, die zur Herstellung des Emulgators verwendet werden können. Will man mit diesen Emulgatoren jedoch Polyisocyanate in Wasser emulgieren, so stellt man fest, daß diese Emulsionen nicht lagerstabil sind. Sie setzen sich bereits nach kurzem Stehen ab und lassen sich, wenn überhaupt, nur schwer wieder aufrühren und in einem gebrauchsfähigen Zustand zurückversetzen. Ihre Anwendungsbreite ist daher stark eingeschränkt.

Aufgabe der vorliegenden Erfindung war es daher, nichtwäßrige Polyisocyanatzubereitungen bereitzustellen, die ein ausgewogenes Eigenschaftsprofil von anwendungstechnischen Eigenschaften aufweisen und in einfacher Weise zu wäßrigen Emulsionen oder Dispersionen verarbeitet werden können, die ohne Sedimentbildung lagerstabil sind.

Demgemäß wurde die oben definierte nichtwäßrige Polyisocyanatzubereitung, ein Verfahren zu ihrer Herstellung und ihre Verwendung in wäßrigen Beschichtungsmitteln und in Klebstoffdispersionen gefunden.

Bevorzugte Ausführungsformen der Erfindung sind den Unteransprüchen zu entnehmen.

Eine nichtwäßrige Polyisocyanatzubereitung wird bekannterweise durch übliche Umsetzung von nichtwäßrigen Reagentien in nichtwäßrigen Medien erhalten.

Ein wesentliches Merkmal der Erfindung liegt in dem Umsetzungsprodukt b). Dies dient als Emulgator, wenn die nichtwäßrige Zubereitung in einem wäßrigen Medium dispergiert oder emulgiert wird. Leicht emulgierbare und gut lagerstabile Produkte werden erhalten, wenn b) aus den obengenannten Diisocyanaten hergestellt wird. Bevorzugt werden 4,4'-Diisocyanatodiphenylmethan (MDI) und 4,4'-Di-(isocyanatocyclohexyl)-methan (HMDI), insbesondere 2,4- und 2,6-Toluylendiisocyanat (TDI). In vielen Fällen haben sich auch Hexamethylendiisocyanat (HDI) und 1-Isocyanato-3,3,5-trimethyl-5-(isocyanatomethyl)cyclohexan (IPDI) bewährt. Die im Umsetzungsprodukt b) eingesetzte Alkoholkomponente ist ein Polyalkylenethermonoalkohol. Die Alkylengruppe hat 2 bis 4 C-Atome, typisch sind -CH₂-CH(CH₃)-, -(CH₂)₄- und bevorzugt -(CH₂)₂-. Der Polyalkylenetheralkohol enthält mehrere oder bevorzugt eine Alkylenetherkette und ist dementsprechend mehr- oder bevorzugt einwertig. Mindestens eine der Alkylenetherketten enthält eine mindestens 8, bevorzugt mindestens 10 Ethylenoxideinheiten umfassende Polyethylenetherkette. Diese Kette hat im allgemeinen bis zu 70 und bevorzugt bis zu 20 Ethylenoxideinheiten. Die Polyalkylenetherketten können gemischt, beispielsweise aus Ethylenoxid und Propylenoxideinheiten aufgebaut sein. Gute Ergebnisse werden erzielt, wenn der Polyalkylenetheralkohol mindestens 60 Gew.-% an Ethylenoxideinheiten enthält. Bevorzugt sind reine Polyethylenoxidketten. Beispiele sind Polyethylenglykole.

Zur Herstellung der an sich bekannten Polyalkylenethermonoalkohole sind übliche, mehrwertige oder vorzugsweise einwertige Startermoleküle wie z. B. Cyclohexanol, 3-Methyl-3-Hydroxymethyloxethan, Phenol, Ethylenglycol, Propylenglycol, Anilin, Pentaerythrit, Trimethylolpropan oder Glycerin geeignet. Bevorzugt sind C₁-C₆-Alkanole wie Methanol und n-Butanol.

Zur Umsetzung der Diisocyanate mit den Alkoholen verwendet man üblicherweise 60 bis 120, bevorzugt 80 bis 120 Äquivalent-% an OH-Gruppen des Polyalkylenethermonoalkoholes, bezogen auf die NCO-Gruppen des Diisocyanates. Eine OH-Gruppe des Alkohols wird mit einer NCO-Gruppe des Diisocyanates äquivalent gesetzt. Das Umsetzungsprodukt b) wird mit dem Polyisocyanat a) in einer solchen Menge abgemischt, daß die Polyisocyanatzubereitung zwischen 1 und 25, bevorzugt 5 bis 20 und insbesondere 10 bis 15 Gew.-% an Ethylenoxideinheiten der Polyalkylenetherketten des Umsetzungsproduktes b) enthält.

Das aliphatische Polyisocyanat a) hat mit 2,5 bis 3,5 eine höhere NCO-Funktionalität als das Diisocyanat. Die mittlere NCO-Funktionalität eines Gemisches berechnet sich dabei aus der Anzahl der NCO-Gruppen pro Einzelverbindung des Gemisches, gemittelt über die molaren Mengen der Einzelverbindungen im Gemisch.

Das Polyisocyanat a) weist im allgemeinen einen NCO-Gehalt von 5 bis 30, vorzugsweise von 10 bis 25 Gew.-% auf.

Aliphatische Polyisocyanate im Sinne der Erfindung sind:
1. Isocyanuratgruppen aufweisende Polyisocyanate auf Basis von aliphatischen und/oder cycloaliphatischen Diisocyanaten. Besonders bevorzugt sind die entsprechenden Isocyanato-Isocyanurate auf Basis von 1,6-Diisocyanatohexan und/oder 1-Isocyanato-3,3,5-trimethyl-5-(isocyanatomethyl)cyclohexan (Isophorondiisocyanat (IPDI)). Die Herstellung derartiger Isocyanuratgruppen aufweisender Polyisocyanate ist beispielsweise in DE-A 2 616 416, EP-A 3765, EP-A 10 589, EP-A 47 452, US-A 4 288 586 oder US-A 4 324 879 beschrieben. Grundsätzlich können in der erfindungsgemäßen Polyisocyanat-Zubereitung nicht nur diese besonders bevorzugten Verbindungen, sondern beliebige Isocyanuratgruppen aufweisende Polyisocyanate auf Basis aliphatischer und/oder cycloaliphatischer Diisocyanate als Komponente a) vorliegen. Bei den als Komponente a) geeigneten Isocyanato-Isocyanuraten handelt es sich somit insbesondere um einfache Tris-isocyanatoalkyl- (bzw. -cycloalkyl-)isocyanurate der Formel 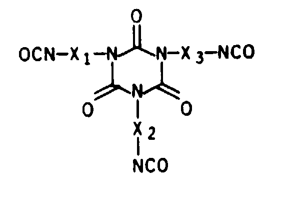 bzw. deren Gemische mit ihren höheren, mehr als einen Isocyanuratring aufweisenden Homologen, wobei in dieser Formel X₁, X₂ und X₃ für gleiche oder verschiedene Reste stehen und den dem Ausgangsdiisocyanat zugrundeliegenden Kohlenwasserstoffrest bedeuten. Die Isocyanato-Isocyanurate weisen im allgemeinen einen NCO-Gehalt von 10 bis 30, vorzugsweise 15 bis 25 Gew.-% und eine mittlere NCO-Funktionalität von 2,6 bis 3,5 auf.
   Aliphatische Polyisocyanate im Sinne der Erfindung sind ferner:
2. Biuretgruppen aufweisende Polyisocyanate mit aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 3,5 auf.
   Aliphatische Polyisocyanate im Sinne der Erfindung sind ferner:
3. Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an IPDI mit einfachen mehrwertigen Alkoholen wie z.B. Trimethylolpropan, Glycerin, 1,2-Dihydroxypropan oder deren Gemischen erhalten werden können. Diese als Komponente a) geeigneten Urethan- und/oder Allophanatgruppen aufweisenden Polyisocyanate weisen im allgemeinen einen NCO-Gehalt von 12 bis 20 Gew.-% und eine mittlere NCO-Funktionalität von 2,5 bis 3 auf.

Bevorzugt werden Polyisocyanate der Gruppen 1 und 2. Es kann selbstverständlich auch ein Gemisch der genannten Polyisocyanate verwendet werden.

Die Herstellung der erfindungsgemäßen Polyisocyanatzubereitung erfolgt in zwei Schritten. Zunächst wird das Umsetzungsprodukt b) hergestellt. Diese Umsetzung des Polyalkylenetheralkohols mit dem Diisocyanat ist an sich bekannt und verläuft üblicherweise bei Temperaturen von 20 bis 150, vorzugsweise von 40 bis 130°C ab. Die Reaktionsdauer ist im allgemeinen so bemessen, daß die mit Isocyanatgruppen reaktionsfähigen Gruppen des Polyalkylenetheralokohols zu mindestens 90 Gew.-% mit Isocyanat umgesetzt sind. Die Umsetzung kann durch die Mitverwendung an sich bekannter, katalytisch wirksamer Substanzen wie Dibutylzinndilaurat, Zinn-(II)-Octoat oder 1,4-Diazabicyclo-(2,2,2)-Octan beschleunigt werden.

In einem darauffolgenden zweiten Verfahrensschritt wird das Polyisocyanat a) mit dem Umsetzungsprodukt b) abgemischt, wobei in manchen Fällen inerte Lösungsmittel zugegen sein können. Dies kann in bekannter Weise durch Rühren bei Raumtemperatur oder leicht erhöhter Temperatur geschehen.

Die so hergestellte Polyisocyanatzubereitung wird vorzugsweise in Substanz verwendet. Selbstverständlich kann man der Zubereitung vor ihrer Verwendung auch geringe Mengen, d.h. beispielsweise 1 bis 10 Gew.-% bezogen auf die lösungsmittelfreie Zubereitung, eines organischen Lösungsmittels wie z.B. Ethylacetat, Aceton oder Methylethylketon zusetzen, um die Viskosität zu reduzieren. Ferner ist es möglich, die erfindungsgemäßen Polyisocyanatzubereitungen zu wäßrigen Emulsionen bzw. Dispersionen mit einem Wassergehalt von im allgemeinen 90 bis 35 Gew.-% zu verarbeiten. Die Herstellung dieser Dispersionen bzw. Emulsionen erfolgt durch einfaches Vermischen der Polyisocyanatzubereitung mit Wasser. Es sind dabei nur geringe Scherkräfte erforderlich, was ein großer Vorteil für den Verarbeiter ist. Es können die dem Fachmann bekannten Mischeinrichtungen wie einfache Rühreinrichtungen eingesetzt werden.

Die erfindungsgemäße Polyisocyanatzubereitung eignet sich zur Modifizierung von wäßrigen Beschichtungsmitteln für Metall, Holz, Papier, Pappe, Kunststoff, Textilien und insbesondere Leder auf Basis von wäßrigen Dispersionen oder Lösungen eines Feststoffgehaltes von 5 bis 40 Gew.-%, vorzugsweise von 5 bis 20 Gew.-%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die erfindungsgemäßen Polyisocyanatzubereitungen werden den wäßrigen Beschichtungsmitteln im allgemeinen in einer Menge von 1 bis 25, vorzugsweise von 2,5 bis 20 Gew.-%, bezogen auf den Feststoffgehalt des Beschichtungsmittels, zugesetzt.

Sie werden in bekannter Weise durch z.B. Spritzen in einer Menge von 5 bis 50 g Feststoff/m² auf das Substrat aufgebracht. Bei der Beschichtung von Leder oder Kunstleder mit derart modifizierten Dispersionen oder Lösungen ergeben sich besonders gute Naßreibechtheiten und Knickbeständigkeiten.

Die erfindungsgemäße Polyisocyanatzubereitung eignet sich insbesondere zur Modifizierung von wäßrigen Klebstoffen, beispielsweise auf Basis von wäßrigen Dispersionen eines Feststoffgehalts entsprechend eines Bindemittelgehaltes von 10 bis 65 Gew.-%, vorzugsweise 20 bis 60 Gew.-%, wie Naturlatex, wäßrigen Dispersionen von Homo- oder Copolymerisaten olefinisch ungesättigter Monomerer und den an sich bekannten wäßrigen Polyurethandispersionen.

Geeignete Dispersionen von Homo- oder Copolymerisaten olefinisch ungesättigter Monomerer sind z.B. an sich bekannte Dispersionen von Homo- oder Copolymerisaten auf Basis von Vinylestern von Carbonsäuren mit2 bis 18, vorzugsweise 2 bis 4 Kohlenstoffatomen wie insbesondere Vinylacetat, gegebenenfalls mit bis zu 70 Gew.-% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -hydroxyethyl- oder -hydroxypropyl-estern, -estern, gegebenenfalls zusammen mit bis zu 70 Gew.-% an anderen olefinisch ungesättigten Monomeren und/oder Butadien-Styrol-Copolymerisaten mit einem Gehalt an Butadien von ca. 20 bis 60 Gew.-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.-%, insbesondere eines Chlorgehalts von ca. 36 Gew.-%.

Bevorzugt werden wäßrige Dispersionen von Copolymerisaten aus 90 bis 99,5 Gew.-% Acrylaten oder Methacrylaten von 1 bis 4 C-Atomen enthaltenden Alkanolen und 0,5 bis 10 Gew.-%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff.).

Geeignete wäßrige Polyurethandispersionen sind solche der an sich bekannten Art, wie sie z.B. in US-A 3 479 310, GB-A 1 076 688, US-A 4 108 814, US-A 4 108 814, US-A 4 092 286, DE-A 2 651 505, US-A 4 190 566, DE-A 2 732 131 oder DE-A 2 811 148 beschrieben sind.

Die eingesetzten wäßrigen Klebstoffe können die in der Klebstofftechnologie üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalzen eingesetzt werden, wobei die Netzmittel im allgemeinen in Mengen von 0,2 bis 0,6 Gew.-%, bezogen auf Füllstoff, zugesetzt werden.

Weitere geeignete Hilfsmittel sind z.B. in Mengen von 0,01 bis 1 Gew.-%, bezogen auf Klebstoff, einzusetzende organische Verdickungsmittel wie z.B. Zellulose-Derivate, Alginate, Stärke oder Stärkederivate oder Polyacrylsäure oder in Mengen von 0,05 bis 5 Gew.-%, bezogen auf Klebstoff, einzusetzende anorganische Verdickungsmittel wie z.B.Bentonite.

Auch Fungizide zur Konservierung können den Klebstoffen zugesetzt werden. Diese kommen im allgemeinen in Mengen von 0,02 bis 1 Gew.-%, bezogen auf Klebstoff, zum Einsatz. Geeignete Fungizide sind beispielsweise Phenol- und Kresol-Derivate oder Zinn-organische Verbindungen.

Klebrigmachende Harze wie z.B. Naturharz oder modifizierte Harze wie Kolophoniumester oder synthetische Harze wie Phthalatharze können ebenfalls im Klebstoff in bekannten Mengen vorliegen.

Auch Lösungsmittel wie beispielsweise Toluol, Xylol, Butylacetat, Methylethylketon, Ethylacetat, Dioxan oder deren Gemische oder Weichmacher wie beispielsweise solche auf Adipat-, Phthalat- oder Phosphat-Basis können den wäßrigen Klebstoffdispersionen zugesetzt werden.

Die erfindungsgemäßen Polyisocyanat-Zubereitungen werden den wäßrigen Klebstoffen im allgemeinen in einer Menge von 1 bis 20, vorzugsweise 2 bis 10 Gew.-%, bezogen auf das Bindemittel der wäßrigen Klebstoffdispersion, zugesetzt.

Dazu kann man die erfindungsgemäße nichtwäßrige Polyisocyanat-Zubereitung in die Klebstoffdispersion in bekannter Weise einrühren. In manchen Fällen werden gute Ergebnisse erzielt, wenn man zunächst eine wäßrige Dispersion herstellt und diese mit der Klebstoffdispersion vermischt.

Die so modifizierten wäßrigen Klebstoffe eignen sich zum Verkleben beliebiger Werkstoffe gleicher oder verschiedener Art, z.B. zum Verkleben von Holz, Papier, Kunststoffen, Textilien, Leder und anorganischen Materialien, wie Keramik, Steingut oder Asbestzement.

Die nachfolgenden Beispiele dienen zur weiteren Erläuterung der Erfindung. Die Prozent- und Teileangaben beziehen sich auf das Gewicht, wenn nichts anderes angegeben ist.

### Beispiele

### Polyalkylenetheralkohol b1:

Auf Methanol gestartetes, monofunktionelles Polyethylenoxid mit einer OH-Zahl von 112, gemessen nach DIN 53 240, entsprechend einem Molekulargewicht von 500. b1 enthält eine Polyetherkette mit mehr als 8 Ethylenoxideinheiten.

### Polyalkylenetheralkohol b2:

Auf n-Butanol gestartetes, monofunktionelles Polyethylenoxid mit einer OH-Zahl von 64, entsprechend einem Molekulargewicht von 870 g/mol. b2 enthält eine Polyetherkette mit mehr als 8 Ethylenoxideinheiten.

### Polyisocyanat a1:

Biuretpolyisocyanat auf Basis von 1,6-Diisocyanatohexan, welches im wesentlichen aus N,N',N"-Tris-(6-isocyanatohexyl)-biuret und dessen höheren Homologen besteht, mit einem NCO-Gehalt von 21,9 %, einem Gehalt an monomerem 1,6-Diisocyanatohexan von weniger als 0,5 Gew.-%, einer Viskosität bei 23°C von 2,9 Pa·s und einer mittleren NCO-Funktionalität von 3,3 gemäß dem Polyisocyanat 2 der EP-A 206 059.

### Polyisocyanat a2:

Durch Trimerisierung eines Teiles der Isocyanatgruppen von 1,6-Diisocyanatohexan hergestelltes, Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 22,2 %, einem Gehalt an monomerem Diisocyanat von weniger als 0,3 %, einer Viskosität bei 23°C von 2,8 Pa·s und einer mittleren NCO-funktionalität von ca. 3,3 gemäß Polyisocyanat 1 der EP-A 206 059.

### Polyisocyanat a3:

Durch Trimerisierung eines Teils der Isocyanatgruppen von IPDI erhaltenes Isocyanato-Isocyanurat mit einem NCO-Gehalt von 12,0 %, einem Gehalt an monomerem IPDI von weniger als 0,5 Gew.-%, einer Viskosität bei 23°C von 1,5 Pa·s und einer mittleren NCO-Funktionalität von 3,3; 70 %ige Lösung in einem 1:1-Gemisch von Butylacetat/Solvesso® 100 (IPDI-T 1890 L der Fa. Hüls); gemäß dem Polyisocyanat 5 der EP-A 206 059.

### aV; zum Vergleich:

Rohes 4,4'-Diphenylmethandiisocyanat mit einem NCO-Gehalt von 31 Gew.-% und einer Viskosität bei 23°C von 0,2 Pa·s, Lupranat® M 20 der Fa. BASF (Roh-MDI).

### Beispiel 1

Zu 150 g b1 (0,3 mol) werden bei 60°C 40 g 4,4'-Di(isocyanatocyclohexyl)methan (HMDI) (0,15 mol) gegeben und 30 min gerührt. Dann wird auf 30°C gekühlt und es werden 900 g a1 eingerührt. Man erhält eine nichtwäßrige Zubereitung mit einem NCO-Gehalt von 17,9 %, einer Viskosität von 2,8 Pa·s bei 23°C und einem Gehalt von 13 % an Ethylenoxideinheiten.

### Beispiel 2

Zu 150 g b1 (0,3 mol) werden bei 60°C 25 g eines Gemisches aus 80 Teilen 2,4-Toluylendiisocyanat (2,4-TDI) und 20 Teilen 2,6-Toluylendiisocyanat (2,6-TDI) (0,15 mol) gegeben und 30 min gerührt. Dann wird auf 30°C gekühlt und es werden 900 g a1 eingerührt. Man erhält eine nichtwäßrige Zubereitung mit einem NCO-Gehalt von 17,7 Gew.-% und einer Viskosität von 4,3 Pa·s bei 23°C.

### Beispiel 3

Zu 150 g b1 werden bei 60°C 40 g 4,4'-Di-(isocyanatocyclohexyl)-methan (HMDI) gegeben und 180 min gerührt. Dann werden 900 g a2 eingerührt. Nach Abkühlen auf Raumtemperatur erhält man eine nichtwäßrige Zubereitung mit einem NCO-Gehalt von 18,3 Gew.-% und einer Viskosität von 2,5 Pa·s bei 23°C.

### Beispiel 4

Zu 150 g b1 werden bei 60°C 26 g eines Gemisches aus 80 Teilen 2,4-Toluylendiisocyanat (2,4-TDI) und 20 Gew.-Teilen 2,6-Toluylendiisocyanat (2,6-TDI) gegeben und 60 min gerührt. Dann wird auf 30°C gekühlt und es werden 900 g a2 eingerührt. Man erhält eine nichtwäßrige Zubereitung mit einem NCO-Gehalt von 18,4 % und einer Viskosität von 3,0 Pa·s bei 23°C.

### Beispiel 5

Zu 150 g b1 (0,3 mol) werden bei 40°C 38 g (0,15 mol) 4,4'-Diisocyanatodiphenylmethan (MDI) gegeben und 30 min gerührt. Dann wird auf 30°C gekühlt und es werden 900 g a1 eingerührt. Man erhält eine nichtwäßrige Zubereitung mit einem NCO-Gehalt von 18,0 % und einer Viskosität von 3,9 Pa·s.

### Beispiel 6

Zu 150 g b1 (0,3 mol) werden bei 60°C 26 g (0,15 mol) eines Gemisches aus 80 Teilen 2,4-Toluylendiisocyanat und 20 Teilen 2,6-Toluylendiisocyanat gegeben und 30 min gerührt. Dann wird auf 30°C gekühlt und es werden 900 g a3 eingerührt. Man erhält eine nichtwäßrige Zubereitung mit einem NCO-Gehalt von 9,9 % und einer Viskosität von 4,4 Pa·s.

### Beispiel 7

Zu 150 g b1 (0,3 mol) werden bei 60°C 34 g (0,15 mol) Tetramethylhexandiisocyanat gegeben und 90 min gerührt. Dann wird auf 30°C gekühlt und es werden 900 g a1 eingerührt. Man erhält eine nichtwäßrige Zubereitung mit einem NCO-Gehalt von 18,0 % und einer Viskosität von 3,3 Pa·s.

### Beispiel 8

Zu 150 g b1 (0,3 mol) werden bei 60°C 25 g (0,15 mol) Hexamethylendiisocyanat (HDI) gegeben und 30 min gerührt. Dann wird auf 30°C gekühlt und es werden 900 g a1 eingerührt. Man erhält eine nichtwäßrige Zubereitung mit einem NCO-Gehalt von 18,1 % und einer Viskosität von 3,9 Pa·s.

### Beispiel 9

Zu 150 g b1 (0,3 mol) werden bei 100°C 33 g (0,15 mol) 1-Isocyanato-3,3,5-trimethyl-5-(isocyanatomethyl)cyclohexan gegeben und 60 min gerührt. Dann wird auf 30°C gekühlt und es werden 900 g a1 eingerührt. Man erhält eine nichtwäßrige Zubereitung mit einem NCO-Gehalt von 17,8 % und einer Viskosität von 3,4 Pa·s.

### Beispiel 10

Zu 150 g b1 (0,3 mol) werden bei 40°C 38 g (0,15 mol) eines Gemisches von 50 Teilen 2,4'Diisocyanatodiphenylmethan und 50 Teilen 4,4'Diisocyanatodiphenylmethan gegeben und 30 min gerührt. Dann wird auf 30°C gekühlt und es werden 900 g a1 eingerührt. Man erhält eine nichtwäßrige Zubereitung mit einem NCO-Gehalt von 17,9 % und einer Viskosität von 3,7 Pa·s.

### Beispiel 11

Zu 80 g b1 (0,16 mol) werden bei 60°C 21 g (0,08 mol) Hexamethylendiisocyanat gegeben und 30 min gerührt. Dann wird auf 30°C gekühlt und es werden 900 g al eingerührt. Man erhält eine nichtwäßrige Zubereitung mit einem NCO-Gehalt von 19,7 % und einer Viskosität von 3,0 Pa·s.

### Beispiel 12

Zu 150 g b2 (0,17 mol) werden bei 40°C 15 g (0,085 mol) eines Gemisches von 80 Teilen 2,4-Toluylendiisocyanat und 20 Teilen 2,6-Toluylendiisocyanat gegeben und 30 min gerührt. Dann wird auf 30°C gekühlt und es werden 900 g al eingerührt. Man erhält eine nichtwäßrige Zubereitung mit einem NCO-Gehalt von 18,2 % und einer Viskosität von 3,9 Pa·s.

### Vergleichsversuch 1

Zu 150 g b1 werden bei 60°C 58 g a1 (äquimolare Mengen von OH-Gruppen und NCO-Gruppen) gegeben und wie in Beispiel 1 gerührt. Nach 60 min wird auf 30°C abgekühlt und wie in Beispiel 1 900 g al eingerührt.

### Vergleichsversuch 2

Zu 150 g b1 werden bei 60°C 57 g a2 (äquimolare Mengen von OH und NCO-Gruppen) gegeben und gerührt. Nach 60 min wird auf 30°C gekühlt und wie in Beispiel 3 900 g a2 eingerührt. Die Zubereitung ist nicht homogen und enthält schleimige Klumpen.

### Vergleichsversuch 3

Zu 150 g b1 werden bei 40°C 38 g 4,4'-Diisocyanatophenylmethan gegeben und 30 min gerührt. Dann wird auf 30°C gekühlt und es werden 900 g aV eingerührt. Man erhält eine nichtwäßrige Zubereitung mit einem NCO-Gehalt von 25 % und einer Viskosität von 0,4 Pa·s.

### Vergleichsversuch 4

Zu 150 g b1 werden bei 40°C 27 g eines Gemisches aus 80 Teilen 2,4- und 20 Teilen 2,6-Toluylendiisocyanat gegeben und 30 min gerührt. Dann wird auf 30°C gekühlt und es werden 900 g aV eingerührt. Man erhält eine nichtwäßrige Zubereitung mit einem NCO-Gehalt von 25 % und einer Viskosität von 0,4 Pa·s.

### Anwendungsprüfung

6 g der Isocyanat-Zubereitung aus Beispiel 1 - 5 und Vergleichsversuch 1 - 4 werden mit 0,05 % Sudan-Rot angefärbt. Die Zubereitungen werden in 200 ml der wäßrigen Polyurethan-Dispersion Luphen® D 200 A (BASF AG) mit einem Propellerrührer (Durchmesser 4 cm) mit einer Geschwindigkeit von 200 Upm. während 120 sec. dispergiert. Die erhaltenen Emulsionen werden in ein 1 1 Sedimentiergefäß geschüttet und nach 1 h beurteilt.

| Zubereitung | Beurteilung |
|---|---|
| Beispiel 1 | <0,1 ml sedimentiert, Dispersion homogen |
| Beispiel 2 | <0,1 ml sedimentiert, Dispersion homogen |
| Beispiel 3 | <0,1ml sedimentiert, Dispersion homogen |
| Beispiel 4 | <0,1 ml sedimentiert, Dispersion homogen |
| Beispiel 5 | <0,1 ml sedimentiert, Dispersion homogen |
| Vergleichsversuch 1 | 8 ml sedimentiert |
| Vergleichsversuch 2 | nicht geprüft |
| Vergleichsversuch 3 | 8 ml sedimentiert |
| Vergleichsversuch 4 | 8 ml sedimentiert |

### Abmischungen mit Klebstoffdispersionen

### Dispersion 1

In einem Reaktionsgefäß mit Rührer und zwei Zulaufgefäßen (Zulauf 1 und Zulauf 2) werden 262 g entsalztes Wasser, 35 g des Zulaufs 1 (siehe unten) und 20 g des Zulaufs 2 vorgelegt und auf 85°C erwärmt. Nach 15 Minuten wird innerhalb von 2 h gleichmäßig der Zulauf 1 sowie innerhalb von 2,5 h gleichmäßig der Zulauf 2 zum Reaktionsgefäß zugegeben. Nach der letzten Initiator-Zugabe (Zulauf 2) wird die Dispersion noch 1 Stunde bei 85°C gerührt. Nach der Polymerisation wird 50 g einer 20 gew.-%igen Lösung des Emulgators p-Isononylphenolpolyoxyethylen(4)-Natriumsulfat zur Dispersion zugegeben und verrührt.
Zulauf 1: (dieser Zulauf wird während der Polymerisation gerührt)

| | |
|---|---|
| 82,5 g | entsalztes Wasser |
| 400 g | Ethylacrylat |
| 90 g | Methylmethacrylat |
| 10 g | 2-Hydroxyethylacrylat |
| 50 g | 20 gew.-%ige Lösung des Natriumsalzes vom Emulgator p-Dodecyldiphenyletherdisulfonat in Wasser |
| 50 g | 20 gew.-%ige Lösung vom Umsetzungsprodukt aus p-Isononylphenol mit 50 mol Ethylenoxid als Emulgator in Wasser |

Zulauf 2:

| | |
|---|---|
| 100 g | entsalztes Wasser |
| 5 g | Natriumpersulfat |

### Dispersion 2

Man arbeitet wie bei Dispersion 1, jedoch ohne Nachseifung mit p-Isononylphenolpolyoxyethylen(4)-Natriumsulfat und mit folgender Änderung in der Monomerkombination bei Zulauf 1:

| | |
|---|---|
| 495 g | Ethylacrylat |
| 5 g | 2-Hydroxyethylacrylat |

### Dispersion 3

Man arbeitet wie bei Dispersion 2, jedoch mit folgender Änderung in der Monomerkombination bei Zulauf 1:

| | |
|---|---|
| 480 g | Ethylacrylat |
| 20 g | 3-Hydroxypropylacrylat |

### Dispersion 4

Man arbeitet wie bei Dispersion 2, jedoch mit folgender Änderung bei Zulauf 1 und Zulauf 2:
Zulauf 1:

| | |
|---|---|
| 100 g | n-Butylacrylat |
| 300 g | Ethylacrylat |
| 90 g | Methylmethacrylat |
| 10 g | 4-Hydroxybutylacrylat |
| 25 g | 20 gew.-%ige Lösung des Natriumsalzes des Emulgators p-Dodecyldiphenyletherdisulfat in Wasser |
| 20 g | 20 gew.-%ige Lösung des Emulgators Polyoxyethylen(20)-sorbitanmonopalmitat |

Zulauf 2:

| | |
|---|---|
| 100 g | entsalztes Wasser |
| 2,5 g | Natriumpersulfat |

### Verbundfolien-Verklebungen

In die Dispersionen 1 - 4 wurden 3 % (bezogen auf deren Feststoffgehalt) der Polyisocyanat-Zubereitung aus Beispiel 1 eingerührt und homogen verteilt. Anschließend wurden diese Polyacrylat-Zubereitungen mit einer Trockenschichtdicke von 3 g/m auf verschiedene 50°C erwärmte Folien (Polyethylenetherphthalat: PETP; Polyamid: PA; Polyvinylchlorid: PVC; Polypropylen (coronavorbehandelt): PP) gerakelt, und nach 20 sec mit einer Polyethylenfolie (coronavorbehandelt) kaschiert. Anschließend wurden die Folien 3 bzw. 7 Tage bei Raumtemperatur und Normalklima gelagert und die Folien in 2 cm breite Streifen zerschnitten. Diese Streifen wurden dann bei 23°C im Winkel von 180 mit einer Geschwindigkeit von 100 mm/min abgezogen. Es wurde die Schälkraft in N bei den 2 cm breiten Streifen angegeben.

| | Schälfestigkeiten in N der Verbundfolien | | | |
|---|---|---|---|---|
| | PETP/PE | PA/PE | PVC/PE | PP/PE |
| Dispersion 1 + 3 % Polyisocyanat-Zubereitung | | | | |
| nach 3 Tagen | 3,5 | 2,5 | 4,0 | 1,4 |
| nach 7 Tagen | 4,4 | 4,0 | 4,2 | 2,5 |
| | | | | |
| Dispersion 2 + 3 % Polyisocyanat-Zubereitung | | | | |
| nach 3 Tagen | 2,5 | 2,0 | 2,2 | 2,1 |
| nach 7 Tagen | 2,5 | 2,5 | 3,3 | 2,1 |
| | | | | |
| Dispersion 3 + 3 % Polyisocyanat-Zubereitung | | | | |
| nach 3 Tagen | 2,1 | 1,9 | 2,2 | 1,4 |
| nach 7 Tagen | 2,0 | 2,5 | 2,4 | 1,5 |
| | | | | |
| Dispersion 4 + 3 % Polyisocyanat-Zubereitung | | | | |
| nach 3 Tagen | 4,5 | 2,7 | 3,3 | 2,5 |
| nach 7 Tagen | 4,5 | 3,0 | 3,3 | 2,5 |

## Patentansprüche

1. Nichtwäßrige Polyisocyanatzubereitung, enthaltend
a) mindestens ein aliphatisches Polyisocyanat mit einer mittleren NCO-Funktionalität von 2,5 bis 3,5 und
b) eine die Dispergierbarkeit des Polyisocyanates gewährleistende Menge eines Umsetzungsproduktes aus einem Diisocyanat, ausgewählt aus Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, Tetramethylhexandiisocyanat, 1-Isocyanato-3,3,5-trimethyl-5-(isocyanatomethyl)cyclohexan, 2,4- und 2,6-Toluylendiisocyanat, Tetramethylxylylen-diisocyanat, p-Xylylendiisocyanat, 2,4'- und 4,4'-Diisocyanatodiphenylmethan oder einem Gemisch aus mindestens zweien dieser Diisocyanate mit einem ein- oder mehrwertigen Polyalkylenethermonoalkohol mit 2 bis 4 C-Atomen in den Alkylengruppen, der eine mindestens 8 Ethylenoxideinheiten aufweisende Polyetherkette enthält.

2. Polyisocyanatzubereitung nach Anspruch 1, enthaltend 1 bis 25 Gew.-%, bezogen auf die Zubereitung, an Ethylenoxideinheiten des Umsetzungsproduktes b).

3. Verfahren zur Herstellung einer Polyisocyanatzubereitung nach den Ansprüchen 1 bis 2, dadurch gekennzeichnet, daß man in einem ersten Schritt das Umsetzungsprodukt b) durch Reaktion des Diisocyanates mit dem Polyalkylenethermonoalkohol herstellt und in einem darauffolgenden zweiten Schritt das Umsetzungsprodukt b) mit dem aliphatischen Polyisocyanat vermischt.

4. Verfahren nach Anspruch 3, dadurch gekennzeichnet, daß man die Reaktion des ersten Schrittes mit 80 bis 120 Äquivalent-% an OH-Gruppen des Polyalkylenetheralkohols, bezogen auf die NCO-Gruppen des Diisocyanates, ausführt.

5. Verwendung der Polyisocyanatzubereitung nach den Ansprüchen 1 bis 2 oder hergestellt nach Anspruch 3 oder 4 in wäßrigen Beschichtungsmitteln.

6. Verwendung der Polyisocyanatzubereitung nach den Ansprüchen 1 bis 2 oder hergestellt nach Anspruch 3 oder 4 in Klebstoffdispersionen.

## Claims

1. A nonaqueous polyisocyanate formulation containing
a) one or more aliphatic polyisocyanates having a mean NCO functionality of from 2.5 to 3.5 and
b) an amount, which ensures that the polyisocyanate is dispersible, of a reaction product of a diisocyanate selected from the group consisting of tetramethylene diisocyanate, hexamethylene diisocyanate, dodecamethylene diisocyanate, 1,4-diisocyanatocyclohexane, 4,4'-di-(isocyanatocyclohexyl)-methane, diisocyanatotrimethylhexane, diisocyanatotetramethylhexane, 1-isocyanato-3,3,5-trimethyl-5-(isocyanatomethyl)-cyclohexane, toluylene 2,4- and 2,6-diisocyanate, tetramethylxylylene diisocyanate, p-xylylene diisocyanate, 2,4'- and 4,4'-diisocyanatodiphenylmethane and a mixture of two or more of these diisocyanates with a monohydric or polyhydric polyalkylene ether monoalcohol where the alkylene groups are of 2 to 4 carbon atoms and which contains a polyether chain having 8 or more ethylene oxide units.

2. A polyisocyanate formulation as claimed in claim 1, containing from 1 to 25% by weight, based on the formulation, of ethylene oxide units of reaction product b).

3. A process for the preparation of a polyisocyanate formulation as claimed in claim 1 or 2, wherein, in a first step, the reaction product b) is prepared by reacting the diisocyanate with the polyalkylene ether monoalcohol and, in a subsequent second step, the reaction product b) is mixed with the aliphatic polyisocyanate.

4. A process as claimed in claim 3, wherein the reaction in the first step is carried out using from 80 to 120 equivalent %, based on the NCO groups of the diisocyanate, of OH groups of the polyalkylene ether alcohol.

5. Use of a polyisocyanate formulation as claimed in claim 1 or 2 or prepared as claimed in claim 3 or 4 in aqueous coating materials.

6. Use of a polyisocyanate formulation as claimed in claim 1 or 2 or prepared as claimed in claim 3 or 4 in adhesive dispersions.

## Revendications

1. Composition non aqueuse de polyisocyanate, contenant
a) au moins un polyisocyanate aliphatique ayant une fonctionnalité NCO moyenne de 2,5 à 3,5 et
b) une quantité, suffisante pour garantir la possibilités de dispersion du polyisocyanate, d'un produit de réaction d'un diisocyanate, choisi parmi le diisocyanate de tétraméthylène, le diisocyanate d'hexaméthylène, le diisocyanate de dodécaméthylène, le 1,4-diisocyanatocyclohexane, le 4,4'-di(isocyanatocyclohexyl)méthane, le diisocyanate de triméthylhexane, le diisocyanate de tétraméthylhexane, le 1-isocyanato-3,3,5-triméthyl-5-(isocyanatométhyl)cyclohexane, le diisocyanate de 2,4- ou 2,6-toluylène, le diisocyanate de tétraméthylxylylène, le diisocyanate de p-xylylène, le 2,4'- ou 4,4'-diisocyanatodiphénylméthane ou un mélange d'au moins deux de ces diisocyanates, avec un monoalcool de polyéther d'alkylène mono- ou polyvalent à 2-4 atomes de carbone dans les groupements alkylène, qui contient une chaîne polyéther comportant au moins 8 motifs oxyde d'éthylène.

2. Composition de polyisocyanate selon la revendication 1, contenant 1 à 25% en poids, par rapport à la composition, de motifs oxyde d'éthylène du produit de réaction b).

3. Procédé de préparation d'une composition de polyisocyanate selon la revendication 1 ou 2, caractérisé en ce que l'on prépare, dans une première étape, le produit de réaction b) par réaction du diisocyanate avec le monoalcool de polyéther d'alkylène et, dans une seconde étape subséquente, on mélange le produit de réaction b) avec le polyisocyanate aliphatique.

4. Procédé selon la revendication 3, caractérisé en ce que l'on conduit la réaction de la première étape avec 80 à 120% en équivalents de groupements OH de l'alcool de polyéther d'alkylkène, par rapport aux groupements NCO du diisocyanate.

5. Utilisation de la composition de polyisocyanate selon la revendication 1 ou 2 ou préparée selon la revendication 3 ou 4 dans des produits d'enduction aqueux.

6. Utilisation de la composition de polyisocyanate selon la revendication 1 ou 2 ou préparée selon la revendication 3 ou 4 dans des dispersions de colle.
